Europäisches Patentamt

European Patent Office

Office européen des brevets

(19)

(11) **EP 1 265 400 B1**

(12) **FASCICULE DE BREVET EUROPEEN**

(45) Date de publication et mention
de la délivrance du brevet:
**07.07.2004 Bulletin 2004/28**

(51) Int Cl.7: **H04L 12/28**, H04L 29/06,
H04Q 7/22

(21) Numéro de dépôt: **02291284.4**

(22) Date de dépôt: **27.05.2002**

(54) **Procédé et dispositif de contrôle d'émission de blocs de données**

Verfahren und Vorrichtung zur steuerung der Übertragung von Datenblöcken

Method and device for controlling data blocks sending

(84) Etats contractants désignés:
**AT BE CH CY DE DK ES FI FR GB GR IE IT LI LU
MC NL PT SE TR**

(30) Priorité: **05.06.2001 FR 0107306**

(43) Date de publication de la demande:
**11.12.2002 Bulletin 2002/50**

(73) Titulaire: **Nortel Networks Limited
St. Laurent, Quebec H4S 2A9 (CA)**

(72) Inventeurs:
• **Ben Rached, Nidham
75017 Paris (FR)**
• **Dornstetter, Jean-Louis
78460 Choisel (FR)**

(74) Mandataire: **Loisel, Bertrand
Cabinet Plasseraud
65/67 rue de la Victoire
75440 Paris Cedex 09 (FR)**

(56) Documents cités:
**WO-A-99/16264**

• **MING-HUNG LIN ET AL: "Supporting broadband,
mobile, high-speed multimedia services based
on TDMA MAC protocol" SYSTEMS, MAN, AND
CYBERNETICS, 1999. IEEE SMC '99
CONFERENCE PROCEEDINGS. 1999 IEEE
INTERNATIONAL CONFERENCE ON TOKYO,
JAPAN 12-15 OCT. 1999, PISCATAWAY, NJ,
USA,IEEE, US, 12 octobre 1999 (1999-10-12),
pages 992-997, XP010363378 ISBN:
0-7803-5731-0**
• **TAAGHOL P ET AL: "An air interface solution for
multi-rate general packet radio service for
GSM/DCS" VEHICULAR TECHNOLOGY
CONFERENCE, 1997, IEEE 47TH PHOENIX, AZ,
USA 4-7 MAY 1997, NEW YORK, NY, USA,IEEE,
US, 4 mai 1997 (1997-05-04), pages 1263-1267,
XP010228872 ISBN: 0-7803-3659-3**
• **AJIB W ET AL: "Acknowledgment operations in
the RLC layer of GPRS" MOBILE MULTIMEDIA
COMMUNICATIONS, 1999. (MOMUC '99). 1999
IEEE INTERNATIONAL WORKSHOP ON SAN
DIEGO, CA, USA 15-17 NOV. 1999,
PISCATAWAY, NJ, USA,IEEE, US, 15 novembre
1999 (1999-11-15), pages 311-317, XP010370732
ISBN: 0-7803-5904-6**

## Description

La présente invention concerne les techniques d'allocation de ressources pour la transmission de données en mode paquets.

Elle s'applique à des systèmes de transmission de paquets dans lesquels des ressources de transmission sont partagées par des flux de données multiplexés destinés à plusieurs utilisateurs. Chaque bloc transmis sur une telle ressource contient une identité du flux dont sont issues les données qu'il comporte. Les terminaux d'utilisateurs qui partagent la ressource reçoivent au moins la partie de chaque bloc qui contient l'identité de flux, ce qui leur permet de déterminer s'il sont concernés par les données du bloc.

L'invention s'applique notamment dans des systèmes de radiocommunication de type GPRS (« General Packet Radio Service »). Ces systèmes ont été développés pour permettre la transmission de données en mode paquets dans des réseaux cellulaires de type GSM (« Global System for Mobile communications »).

Les réseaux GSM utilisent une technique d'accès multiple à répartition dans le temps (TDMA (« Time Division Multiple Access ») dans laquelle les canaux physiques définis dans chaque cellule correspondent à des tranches temporelles récurrentes sur une fréquence porteuse. Ces tranches temporelles se répètent au rythme de trames composées chacune de huit tranches. Ce schéma de multiplexage, destiné à l'origine à des transmissions en mode circuit, a été repris pour supporter un service de paquets, à savoir le GPRS. Sur la voie montante (des stations mobiles vers le réseau), l'accès au canal physique de données GPRS est régi par des commandes fournies par le réseau. Sur la voie descendante (du réseau vers les stations mobiles), le réseau sélectionne un flux d'utilisateur pour chaque occurrence de la tranche temporelle du canal physique.

Un canal de données GPRS est alloué de façon temporaire, lorsque des données sont à transmettre. Des flux temporaires (TBF, « Temporary Block Flow ») sont donc constamment créés et supprimés.

L'article "IEEE, Supporting Broadband, Mobile, High-speed Multimedia Services Based on TDMA MAC Protocol" publié par Ming-Hung Lin, Ray-Guang Cheng et Chiung-Shien Wu, décrit par exemple, un tel procédé de contrôle d'émission de blocs de données appartenant à plusieurs flux vers des terminaux sur des canaux physiques, chaque canal physique ayant des périodes successives destinées chacune à l'émission d'un bloc, le procédé comprenant les étapes d'attribuer à chaque nouveau flux crée au moins un canal logique supporté par l'un des canaux physiques et de sélectionner pour chaque période d'émission sur un canal physique, un flux de blocs auquel est attribué un canal logique afin de commander l'émission d'un bloc de flux sélectionné au cours de ladite période d'émission.

Dans ce contexte, la gestion des débits fournis aux différents flux est un problème complexe. Il est théoriquement possible de rechercher à chaque instant l'allocation optimale des ressources en fonction des débits demandés pour les différents flux actifs et du nombre (fixe ou variable) de canaux physiques dédiés au service GPRS dans la cellule. Mais en pratique cette optimisation requiert une quantité de calculs rédhibitoire compte tenu des création et suppressions très fréquentes de TBF. De plus, il faut prendre en compte le fait que certains flux sont prioritaires par rapport à d'autres, en fonction des abonnements souscrits, et le fait que certains terminaux peuvent avoir des capacités de réception différentes en termes de nombre de tranches par trame.

Un but de la présente invention est de proposer un mode de gestion des débits qui prenne en compte ces contraintes et qui soit d'une mise en oeuvre relativement simple.

L'invention propose ainsi un procédé de contrôle d'émission de blocs de données appartenant à plusieurs flux temporaires de blocs vers des terminaux sur un nombre L de canaux physiques dédiés à la transmission de données en mode paquets, L étant un nombre au moins égal à 1, chaque canal physique ayant des périodes successives destinées chacune à l'émission d'un bloc. Le procédé comprend les étapes suivantes :

- déterminer des débits de transmission respectivement alloués aux flux de blocs en fonction de débits de transmission respectivement demandés lors de la création des flux ;
- attribuer à chaque nouveau flux créé au moins un canal logique de trafic supporté par l'un des L canaux physiques ; et
- sélectionner, pour chaque période d'émission sur un canal physique, un flux de blocs auquel est attribué un canal logique de trafic supporté par ledit canal physique afin de commander l'émission d'un bloc du flux sélectionné au cours de ladite période d'émission, la sélection de flux étant gouvernée par les valeurs des débits de transmission alloués aux flux auxquels sont attribués des canaux logiques de trafic supportés par ledit canal physique.

Les terminaux sont répartis en plusieurs classes d'abonnement correspondant à différents niveaux de priorité, et on associe à chaque classe d'abonnement un paramètre de restriction de débit représentant une proportion du débit global demandé pour les flux de blocs vers des terminaux de ladite classe. Les débits de transmission alloués aux flux sont déterminés de façon à tenir compte des proportions représentées par les paramètres de restriction en cas d'insuffisance des canaux physiques dédiés au mode paquets par rapport au total du débit demandé pour les flux de blocs.

Le procédé contrôle le multiplexage temporel des flux en leur allouant des débits qui, en cas de pénurie des ressources de transmission, sont déterminés par des paramètres de restriction inclus dans les paramètres d'abonnement. Les priorités différentes pouvant exister entre les flux sont alors aisément prises en compte. L'allocation globale des ressources n'est pas conforme à la solution optimale du problème d'allocation, mais elle permet un multiplexage efficace et une mise en oeuvre relativement aisée, compatibles avec les très fréquentes requêtes de création et de suppression de TBF.

Typiquement, le paramètre de restriction de débit associé à une classe d'abonnement donnée représente une proportion du débit global demandé pour l'ensemble des flux de blocs vers des terminaux de cette classe qui peut ne pas être allouée à cet ensemble de flux dans certains au moins des cas d'insuffisance des canaux physiques dédiés au mode paquets.

Dans un mode de réalisation particulier, le procédé répond à la création d'un flux de blocs, pour lequel est demandé un débit tel que les canaux physiques dédiés au mode paquets deviennent insuffisants par rapport au total du débit demandé, en allouant aux flux de blocs vers les terminaux de la classe d'abonnement correspondant au niveau de priorité le plus faible des débits de transmission inférieurs aux débits respectivement demandés pour lesdits flux, le rapport entre le débit global alloué et le débit global demandé pour lesdits flux étant au plus égal à 1 moins la proportion de débit représentée par le paramètre de restriction associé à ladite classe correspondant au niveau de priorité le plus faible.

Plus généralement, les classes d'abonnement étant indexées par un entier k allant de 1 pour la classe la moins prioritaire à N pour la classe la plus prioritaire, le procédé peut comporter les étapes suivantes en réponse à la création d'un flux de blocs pour lequel est demandé un débit tel que la différence entre le total du débit demandé et la capacité en débit des canaux physiques dédiés au mode paquets devient supérieure à

$$\sum_{k=1}^{n} M_k.Dt_k$$

(n étant un entier tel que $1 \leq n < N$, $M_k$ désignant la proportion de débit représentée par le paramètre de restriction de débit associé à la classe k et $Dt_k$ désignant le débit global demandé pour les flux vers les terminaux de la classe k) :

- allouer aux flux de blocs vers les terminaux de chaque classe k, avec $1 \leq k \leq n$, des débits de transmission sensiblement égaux à $1 - M_k$ fois les débits respectivement demandés pour lesdits flux ; et
- allouer aux flux de blocs vers les terminaux de la classe n+1 des débits de transmission inférieurs aux débits respectivement demandés pour lesdits flux, le rapport entre le débit global alloué auxdits flux et le débit global demandé pour lesdits flux étant au plus égal à $1 - M_{n+1}$.

En cas de très forte demande de débit (création d'un flux de blocs pour lequel est demandé un débit tel que la différence entre le total du débit demandé et la capacité en débit des canaux physiques dédiés au mode paquets devient égale à

$$\alpha \times \sum_{k=1}^{N} M_k.Dt_k$$

avec $\alpha > 1$), ce mode d'allocation des débits peut être complété par une réduction uniforme de toutes les classes. On alloue alors aux flux de blocs vers les terminaux de chaque classe k, avec $1 \leq k \leq N$, des débits de transmission sensiblement égaux à $(1 - M_k)/\alpha$ fois les débits respectivement demandés pour lesdits flux.

Symétriquement, en réponse à la suppression d'un flux temporaire de blocs intervenant alors que les canaux physiques dédiés au mode paquets étaient insuffisants par rapport au total du débit demandé pour les flux de blocs, on procède à une augmentation des débits alloués aux flux de blocs vers les terminaux de la classe d'abonnement correspondant au niveau de priorité le plus élevé auxquels étaient précédemment alloués des débits inférieurs aux débits demandés.

Un autre aspect de la présente invention se rapporte à un dispositif de contrôle d'émission de blocs de données appartenant à plusieurs flux temporaires de blocs vers des terminaux, comprenant des moyens de traitement agencés pour mettre en oeuvre un procédé tel que défini ci-dessus.

D'autres particularités et avantages de la présente invention apparaîtront dans la description ci-après d'exemples de réalisation non limitatifs, en référence aux dessins annexés, dans lesquels :

- la figure 1 est un schéma d'un réseau de type GPRS auquel l'invention peut s'appliquer ;
- la figure 2 est un schéma synoptique d'une unité de contrôle de paquets d'un tel réseau, adaptée à la mise en oeuvre de l'invention ;
- la figure 3 est un schéma synoptique de la partie émission d'une unité de contrôle de paquets selon la figure 2 ;
- les figures 4a et 4b montrent un organigramme d'une procédure applicable par un module de gestion de débits d'une unité selon la figure 3 de la lors de la création d'un flux temporaire de blocs ; et
- la figure 5 montre un organigramme d'une procédure applicable par le module de gestion de débits lors de la suppression d'un flux temporaire de blocs.

L'invention est décrite ci-après dans son application à l'infrastructure d'un réseau GPRS.

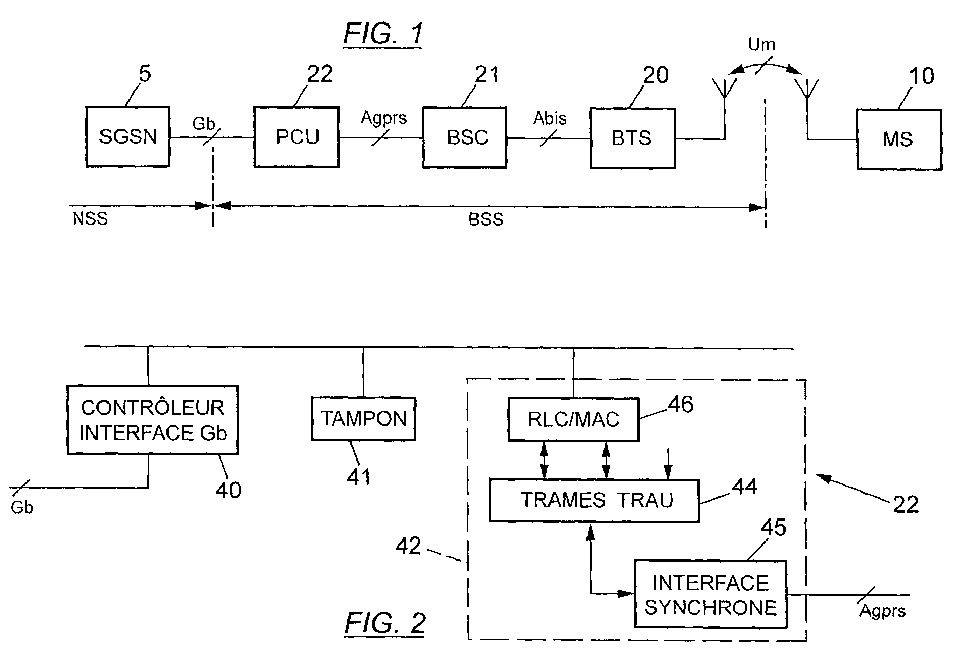

Le réseau GPRS illustré sur la figure 1 est bâti sur une infrastructure GSM, et classiquement divisé en un coeur de réseau, aussi appelé sous-système de réseau et de commutation ou NSS (« Network and Switching Subsystem »), et un réseau d'accès radio également appelé sous-système de stations de base ou BSS (« Base Station Subsystem »).

Pour le service de paquets, les commutateurs du NSS sont appelés noeuds de support GPRS ou GSN (« GPRS Support Node »). On distingue les SGSN (« Serving GSN ») 5 qui sont reliés au BSS par l'intermédiaire d'une interface appelée Gb, et les GGSN (« Gateway GSN », non représentés) qui servent de passerelle avec des réseaux extérieurs de transmission de paquets, tels que par exemple le réseau Internet.

Une description générale de l'interface radio, appelée Um, entre les stations mobiles (MS) 10 et les stations de base (BTS) 20 du BSS est fournie dans la spécification technique ETSI TS 101 350, « Digital cellular telecommunications system (Phase 2+) ; General Packet Radio Service (GPRS) ; Overall description of the GPRS radio interface ; Stage 2 (GSM 03.64, version 8.5.0, Release 1999), publiée par l'ETSI (European Telecommunications Standards Institute) en août 2000.

Chaque station de base 20 est supervisée par un contrôleur de stations de base ou BSC (« Base Station Controller ») 21 par l'intermédiaire d'une interface appelée Abis. Pour gérer la transmission de paquets GPRS, le BSS comprend en outre une entité 22 appelée unité de contrôle de paquets ou PCU (« Packet Control Unit »). La localisation du PCU à l'intérieur du BSS n'est pas normalisée. Dans l'exemple représenté sur la figure 1, le PCU 22 est situé entre le BSC 21, avec lequel il communique à travers une interface appelée Agprs, et le NSS, avec lequel il communique à travers l'interface Gb.

La figure 2 illustre une structure possible d'un PCU 22 situé entre un SGSN 5 et un BSC 21, comme dans l'exemple de la figure 1. La référence 40 désigne le contrôleur d'interface Gb pour la liaison avec le SGSN 5.

L'interface Gb est de type asynchrone. Elle repose sur le protocole de relais de trame (FR, « Frame Relay »), ainsi qu'un protocole appelé BSSGP (« BSS GPRS Protocol ») qui transporte des informations de routage et de qualité de service entre le BSS et le SGSN. Le contrôleur d'interface Gb 40 assure la liaison physique avec le SGSN 5, ainsi que les procédures propres aux protocoles FR et BSSGP.

Les liaisons entre le PCU 22 et les BTS 20 à travers l'interface Agprs sont de type synchrone. En conséquence, les données manipulées par le PCU 22 entre le contrôleur d'interface Gb 40 et le contrôleur d'interface Agprs 42 transitent par une mémoire tampon 41 où sont enregistrées des files d'attente de paquets.

Entre le PCU 22 et la BTS 20, les informations sont portées par des trames de type TRAU (« Transcoder/Rate Adaptor Unit ») de 320 bits, à raison d'une trame toutes les 20 ms. Ces trames TRAU sont mises en forme et traitées par un module 44 et transmises par l'intermédiaire de circuits d'interface synchrone 45 qui réalisent des sous-voies MIC à 16 kbit/s avec les BTS 20. Plusieurs sous-voies à 16 kbits peuvent être multiplexées sur l'interface Agprs et séparées par le BSC 21 pour l'acheminement vers les BTS. Un module 46 du contrôleur d'interface Agprs 42 met en oeuvre les protocoles radio de la couche 2 du modèle OSI, à savoir les protocoles RLC/MAC (« Radio Link Control / Medium Access Control ») décrits dans la norme européenne ETSI EN 301 349, Digital cellular telecommunications system (Phase 2+) ; General Packet Radio Service (GPRS) ; Mobile Station (MS) - Base Station System (BSS) interface ; Radio Link Control/Medium Access Control (RLC/MAC) protocol (GSM 04.60, version 8.3.1, Release 1999), publiée par l'ETSI en octobre 2000.

La sous-couche RLC réalise l'interface avec le protocole de couche supérieure, appelé LLC (« Logical Link Control »). Elle assure la segmentation et le réassemblage des unités de données du protocole LLC (LLC-PDU), qui sont échangées de manière asynchrone sur l'interface Gb. Elle produit des blocs de données RLC auxquels la sous-couche MAC rajoute un en-tête MAC d'un octet.

Le multiplexage des paquets sous forme de blocs RLC/MAC utilise une identité de flux temporaire TFI (« Temporary Flow Identity ») placée dans l'entête RLC de chaque bloc. La TFI est composée de cinq bits identifiant le flux temporaire de blocs (TBF, « Temporary Block Flow ») d'où proviennent les données RLC du bloc. Un TBF est une connexion supportant le transfert unidirectionnel de LLC-PDU sur des canaux physiques de données. Un TBF est temporaire, c'est-à-dire qu'il n'est maintenu que pendant le transfert de données

La sous-couche MAC gère le multiplexage des blocs relevant des différents TBF actifs sur les canaux physiques disponibles, en arbitrant entre les différents utilisateurs mobiles par un mécanisme de planification (« scheduling »), consistant à sélectionner un TBF pour chaque période d'émission sur le canal.

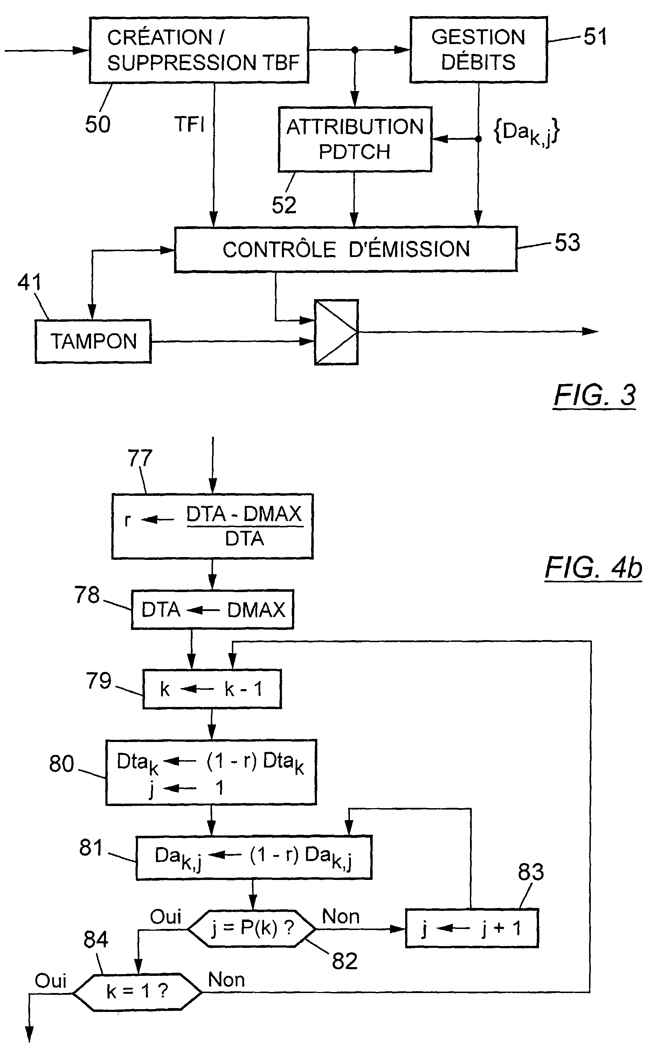

La figure 3 montre une organisation possible des éléments du module RLC/MAC 46 qui interviennent dans le multiplexage des blocs descendants. Les TBF sont créés et supprimés par une unité 50 en fonction d'informations de signalisation reçues de la couche LLC et/ou du contenu de la mémoire tampon d'émission 41.

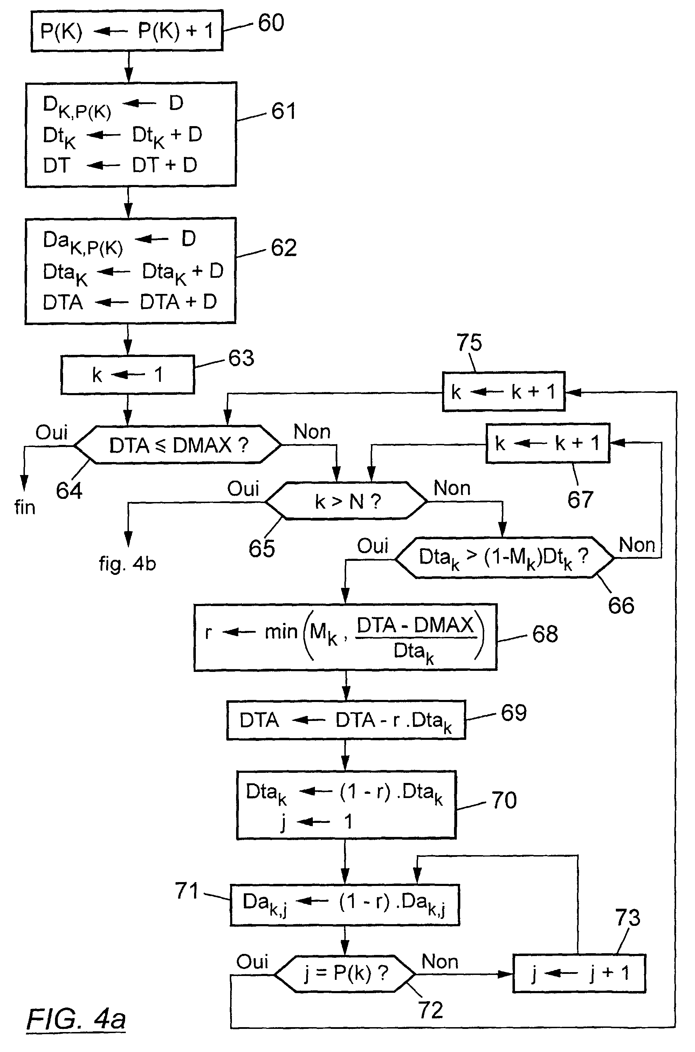

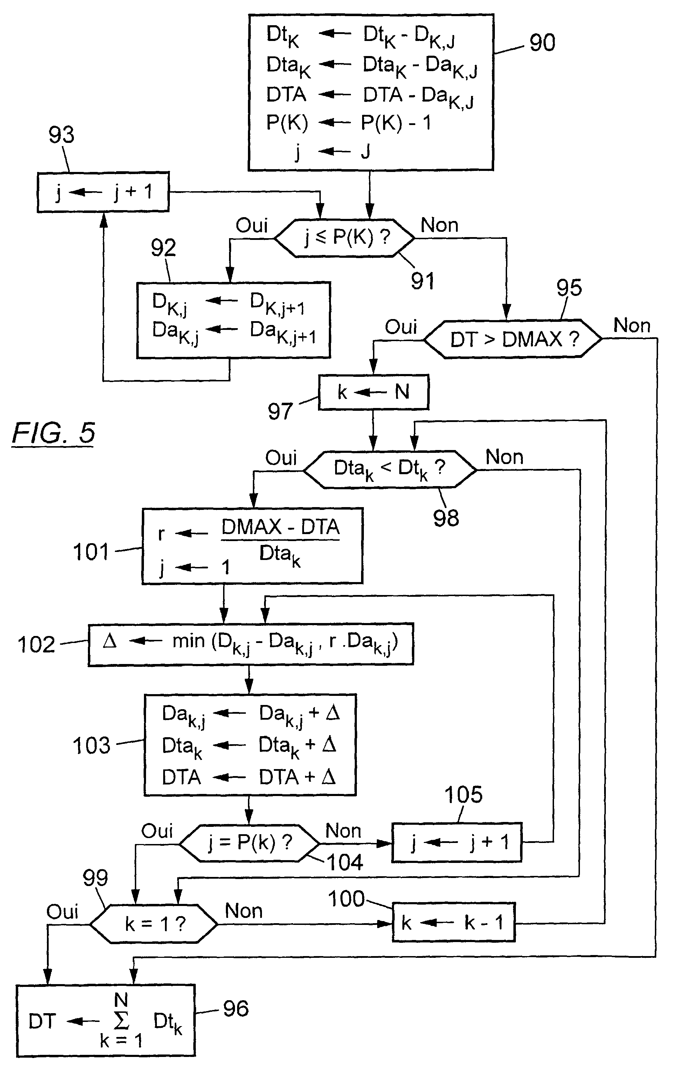

En réponse à la création d'un TBF pour lequel un débit D est demandé ou à la suppression d'un TBF, une unité 51 de gestion de débits calcule un ensemble de débits $Da_{k,j}$ alloués aux différents utilisateurs (TBF) actifs. Tant que la somme des débits demandés n'excède pas la capacité de transmission descendante DMAX dans la cellule concernée, ces débits alloués $Da_{k,j}$ sont égaux aux débits respectivement demandés pour les différents TBF. En cas de débordement, certains au moins des utilisateurs ne se verront pas allouer le débit demandé mais un débit minoré, par exemple déterminé de la manière décrite plus loin en référence aux figures 4a, 4b et 5.

Le système GPRS utilise la structure des trames TDMA du GSM. Un canal physique élémentaire de transmission dans une cellule consiste en une tranche temporelle sur une fréquence porteuse. Lorsque ce canal est dédié à du trafic de paquets, il est appelé PDCH (« Packet Data Channel »). Sur chaque porteuse, le temps est réparti en trames successives de 4,615 ms, chaque trame se composant de huit tranches temporelles de 0,577 ms. Le PDCH est alors défini par un index de porteuse et un index de tranche au sein de la structure de trame. Un bloc RLC/MAC est réparti sur quatre tranches temporelles consécutives du PDCH sur lequel il est émis. On peut donc considérer que le PDCH est réparti en périodes d'émission successives correspondant chacune à quatre trames consécutives. Un bloc RLC/MAC est émis au cours d'une telle période d'émission.

Les débits précités (après codage de canal) peuvent être exprimés en nombres de tranches temporelles par période de 4,615 ms, auquel cas la capacité de transmission descendante DMAX est égale au nombre $L \geq 1$ de canaux physiques descendants dédiés au service GPRS dans la cellule. Par exemple, si une seule fréquence porteuse est utilisée (totalement) pour le service GPRS dans une cellule donnée, alors DMAX = L = 8 pour cette cellule. On peut avoir DMAX < 8 puisqu'une porteuse peut n'être utilisée que partiellement pour le service GPRS. On peut aussi avoir DMAX > 8 puisque des PDCH peuvent exister sur plusieurs porteuses dans une cellule donnée. Le PCU peut faire varier dans le temps le nombre L, en fonction des besoins.

Un canal logique de trafic attribué à un transfert de données est appelé PDTCH (« Packet Data Traffic Channel »). Un PDTCH est dédié temporairement à un terminal lorsqu'un TBF est activé pour celui-ci. Les PDTCH partageant un même PDCH sont distingués au moyen des identités de flux TFI placées dans les entête RLC/MAC des blocs émis. Un terminal peut utiliser des PDTCH multiples en parallèle pour un transfert de paquets donné.

Chaque terminal GPRS, considéré comme l'association d'un équipement d'utilisateur et d'un abonnement, possède certaines caractéristiques qui interviennent dans le processus de multiplexage des paquets sur la voie descendante :

- un débit maximum admissible, dépendant de l'abonnement. Au niveau de la couche RLC/MAC, le débit D demandé pour un TBF vers le terminal sera toujours inférieur ou égal à ce débit maximum ;
- une capacité multitranche (« multislot capability ») sur la voie descendante. Un terminal de capacité multitranche C peut simultanément recevoir des paquets sur C PDCH d'une même porteuse pour un flux donné, c'est-à-dire qu'il est capable de se placer en écoute pendant C tranches consécutives d'une trame sur une porteuse (C entier avec $1 \leq C \leq 8$) ;
- une classe d'abonnement permettant de définir des priorités entre différents flux. Dans l'exposé ciaprès, cette classe est représentée par un index entier k compris entre 1 et N, l'index N (> 1) représentant la classe la plus prioritaire. A titre d'exemple, k = N = 4 pour un abonnement « platine », k = 3 pour un abonnement « or », k = 2 pour un abonnement « argent » et k = 1 pour un abonnement « meilleur effort ».

On note P(k) le nombre de TBF actifs dans une cellule donnée relativement à des terminaux de classe k ($P(k) \geq 0$). Le débit demandé pour l'ensemble de ces P(k) TBF est noté $Dt_k$, et le débit alloué par l'unité 51 à l'ensemble de ces P(k) TBF est noté $Dta_k$. Pour $1 \leq j \leq P(k)$, les notations $D_{k,j}$ et $Da_{k,j}$ désignent respectivement le débit demandé pour le j-ième TBF de la classe k et le débit alloué à ce j-ième TBF, avec

$$Dt_k = \sum_{j=1}^{P(k)} D_{k,j}$$

et

$$Dta_k = \sum_{j=1}^{P(k)} Da_{k,j}.$$

Les débits totaux, demandé et alloué, sont respectivement

$$DT = \sum_{k=1}^{N} Dt_k \quad et \quad DTA = \sum_{k=1}^{N} Dta_k.$$

Au démarrage, les quantités $Dt_k$, $Dta_k$ ($1 \leq k \leq N$), DT et DTA sont initialisées à zéro.

Lorsque l'unité 51 doit diminuer le débit alloué à certains des utilisateurs, la sélection des utilisateurs en question est opérée en considération des classes d'abonnement. Pour cela, chaque classe est associée à un paramètre de restriction de débit $M_k$ compris entre 0 et 1, correspondant à un taux de réduction maximal du débit alloué aux TBF de la classe k. Lorsque les capacités de transmission de paquets dans la cellule sont à saturation (DT > DMAX), l'unité 51 commence par enlever du débit aux utilisateurs de la classe la moins prioritaire, jusqu'à hauteur de la proportion $M_1$. Ensuite, elle fait de même avec les autres classes, par ordre de priorité. On prendra en général $M_1 > M_2 > ... > M_N = 0$, ce qui assure le meilleur traitement aux utilisateurs des classes supérieures.

Les figures 4a, 4b et 5 montrent des procédures applicables par l'unité 51 pour ajuster les débits alloués $Da_{k,j}$ lors de la création (figures 4a et 4b) et de la suppression (figure 5) d'un TBF vers un terminal de classe K ($1 \leq K \leq N$).

A la création d'un TBF de classe K pour lequel est demandé un débit D (figure 4a), le nombre P(K) est d'abord incrémenté d'une unité à l'étape 60. Le débit $D_{K,P(K)}$ reçoit la valeur D du débit demandé, et les débits totaux $Dt_K$ et DT sont augmentés de cette valeur D à l'étape 61. Dans un premier temps (étape 62), le nouveau débit alloué $Da_{K,P(K)}$ est également pris égal à D, et les débits totaux $Dta_K$ et DTA sont également augmentés de D. L'index de classe k est initialisé à 1 (classe la moins prioritaire) à l'étape 63 pour amorcer une boucle de réduction des débits alloués dans le cas où le test suivant 64 montre que le débit total alloué DTA dépasse la valeur maximale DMAX. La procédure se termine quand ce dépassement ne se produit pas.

Quand DTA > DMAX au test 64, l'index k est comparé à N lors du test 65. Si k ≤ N, un autre test 66 est effectué pour déterminer si la classe k subit déjà la réduction de débit maximale définie par le paramètre $M_k$. Si tel est le cas ($Dta_k \leq (1-M_k).Dt_k$ au test 66), l'index de classe k est simplement incrémenté d'une unité à l'étape 67 avant de revenir au test 65. Si du débit peut être sacrifié dans la classe k ($Dta_k > (1-M_k).Dt_k$ au test 66), l'étape suivante 68 consiste à calculer un taux de réduction de débit applicable aux TBF de la classe k. Ce taux r est égal à la quantité (DTA-DMAX)/$Dta_k$ plafonnée à $M_k$. La valeur DTA du débit total alloué est diminuée de $r.Dta_k$ à l'étape 69, puis la valeur $Dta_k$ du débit alloué aux TBF de la classe k est diminuée de la même quantité à l'étape 70. Le débit $Da_{k,j}$ alloué à chaque TBF de la classe est réduit dans la même proportion r dans chaque itération 71 d'une boucle initialisée par j = 1 (quand j < P(k) au test suivant 72, l'index j est incrémenté d'une unité à l'étape 73 avant de procéder à la prochaine itération 71). A la fin de cette boucle (j = P(k) au test 72), l'index de classe k est incrémenté d'une unité à l'étape 75 avant de répéter le test 64.

Le processus illustré par la figure 4a assure, pour $1 \leq k \leq N$, la condition :

$$(1 - M_k) \times Dt_k \leq Dta_k \leq Dt_k \qquad (1)$$

Lorsque

$$\sum_{k=1}^{n} M_k.Dt_k < DT - DMAX \leq \sum_{k=1}^{n+1} M_k.Dt_k$$

avec $0 \leq n < N$, on a $Dta_k \approx (1 - M_k) \times Dt_k$ pour $1 \leq k \leq n$, $(1 - M_n) \times Dt_n \leq Dta_n \leq Dt_n$ et $Dta_k = Dt_k$ pour $n < k \leq N$.

Dans certains cas de forte insuffisance des ressources fournies par les L PDCH, c'est-à-dire si

$$DT - DMAX > \sum_{k=1}^{N} M_k.Dt_k \,,$$

les conditions (1) ne peuvent cependant plus être vérifiées. Ainsi, quand k > N au test 65, toutes les classes subissent déjà des réductions de débit dans des proportions au moins égales aux paramètres $M_k$. Une réduction supplémentaire uniforme est alors appliquée à tous les TBF. Les opérations correspondantes sont illustrées par la figure 4b.

Le taux de réduction supplémentaire r = (DTA-DMAX)/DTA est calculé (sans plafonnement) à l'étape 77. Ce taux vérifie la relation $(1 - r) \approx 1/\alpha$ où $\alpha$ (> 1 ) est défini par la relation

$$DT - DMAX = \alpha \times \sum_{k=1}^{N} M_k.Dt_k \,.$$

La valeur DMAX est ensuite attribuée au paramètre DTA à l'étape 78 avant d'effectuer une boucle sur les classes k. Dans chaque itération de cette boucle, l'index k est décrémenté d'une unité à l'étape 79, puis le nombre $Dta_k$ est réduit dans la proportion r à l'étape 80. Le débit $Da_{k,j}$ alloué à chaque TBF de la classe est réduit dans la même proportion r dans chaque itération 81 d'une boucle interne initialisée par j = 1 (quand j < P(k) au test suivant 82, l'index j est incrémenté d'une unité à l'étape 83 avant de procéder à la prochaine itération 81), ce qui revient à prendre $Da_{k,j} \approx [(1 - M_k)/\alpha] \times D_{k,j}$. A la fin de cette boucle (j = P(k) au test 82), l'index de classe k est comparé à 1 au test 84. Si k > 1, on revient à l'étape 79. La procédure est terminée quand k = 1.

Lors de la suppression du J-ième TBF de la classe K ($1 \leq J \leq P(k)$), le nombre P(K) est décrémenté d'une unité à l'étape 90 (figure 5), où le débit $D_{K,J}$ qui avait été demandé pour ce TBF est retranché de $Dt_K$, et le débit $Da_{K,J}$ qui lui avait été alloué est retranché de $Dta_K$ et de DTA. Les valeurs de débit $D_{K,j}$ et $Da_{K,j}$ pour les TBF de la classe K et de rangs j > J sont ensuite décalées pour tenir compte de la suppression du TBF J, dans une boucle 91-93 initialisée par j = J. Tant que j ≤ P(K) (test 91), un décalage est effectué à l'étape 92 en remplaçant les valeurs de débit $D_{K,j}$ et $Da_{K,j}$ par $D_{K,j+1}$ et $Da_{K,j+1}$, respectivement, puis l'index j est incrémenté d'une unité à l'étape 93. Après ce décalage (j > P(K) au test 91), l'unité 51 détermine au test 95 si les ressources PDCH de la cellule étaient saturées avant la suppression demandée. Si elles n'étaient pas saturées, c'est-à-dire si le débit total demandé DT était inférieur ou égal à DMAX, le processus se termine par la mise à jour de

$$DT = \sum_{k=1}^{N} Dt_k$$

à l'étape 96.

Si les ressources PDCH de la cellule étaient saturées (DT > DMAX au test 95), l'unité 51 restitue une partie au moins du débit demandé qui n'était pas alloué. Elle commence cette restitution par les classes les plus prioritaires, de sorte que l'index de classe k est initialisé à N à l'étape 97. Si le débit demandé pour l'ensemble des TBF de la classe k était entièrement alloué (Dta$_k$ = Dt$_k$ au test 98), l'index k est comparé à 1 au test 99. Si k > 1, cet index k est décrémenté d'une unité à l'étape 100 avant d'effectuer le test 98 pour la classe suivante. Si une partie du débit demandé pour les TBF de la classe k n'était pas alloué (Dta$_k$ < Dt$_k$ au test 98), un taux d'augmentation r est calculé à l'étape 101 selon r = (DMAX-DTA)/Dta$_k$, et l'index j est initialisé à 1 pour la boucle suivante 102-105. L'augmentation de débit $\Delta$ est calculée à l'étape 102 dans chaque itération de cette boucle, comme étant le minimum entre l'insuffisance de débit D$_{k,j}$ - Da$_{k,j}$ et la fraction r. Da$_{k,j}$. Les débits Da$_{k,j}$, Dta$_k$ et DTA sont augmentés de cette quantité $\Delta$ à l'étape 103, après laquelle l'index j est comparé à P(k) au test 104. Si j < P(k), l'index j est incrémenté d'une unité à l'étape 105 avant de revenir à l'étape 102 pour l'itération suivante. Quand j = P(k), l'unité passe au test 99. Quand k = 1 lors de test, le processus se termine à l'étape 96 précitée.

En réponse à la création d'un TBF (K, J) auquel a été alloué un débit Da$_{K,J}$, une unité 52 attribue un ou plusieurs PDTCH au nouveau TBF. Cette tâche est exécutée en minimisant une fonction coût q(f,t) définie pour différents PDCH identifiés chacun par un index de porteuse f et un index de tranche t. Un exemple de fonction coût utilisable est donné par :

$$q(f,t) = \sum_{u=t}^{t+C_{K,J}-1} \sum_{(k,j) \in T(f,u)} \frac{Da_{k,j}}{C_{k,j}}$$

où C$_{k,j}$ désigne la capacité multitranche du terminal auquel est destiné le TBF (k, j), et T(f,u) représente l'ensemble des TBF auxquels un PDTCH est attribué sur le PDCH (f, u) à l'instant considéré. Cette fonction coût q (f,t) n'est définie que pour les couples (f, t) tels que les tranches t à t+C$_{K,J}$-1 ($\leq$ 8) sur la porteuse f soient des PDCH.

Il est à noter que d'autres fonctions coût seraient utilisables par l'unité 52. De telles fonctions peuvent notamment pondérer différemment les débits alloués aux autres TBF en fonction des classes d'abonnement correspondantes.

Après avoir identifié le couple (f, t) qui minimise q(f,t), l'unité 52 alloue C$_{K,J}$ PDTCH au nouveau TBF (K, J) sur la porteuse f, dans les tranches t à t+C$_{K,J}$-1.

Les C$_{K,J}$ PDCH correspondants sont identifiés dans le message de signalisation « Packet Downlink Assignment» transmis à la station mobile destinataire.

Le module RLC/MAC du PCU comporte encore un contrôleur 53 qui assure l'émission des paquets descendants. Chaque fois qu'il faut produire un bloc RLC/MAC à émettre sur un PDCH (f, t), le contrôleur 53 se charge de lire des données dans la mémoire tampon 41 et d'y adjoindre l'en-tête RLC/MAC approprié, incluant notamment l'identité TFI du TBF dont relèvent ces données. Si un seul PDTCH existe sur le PDCH en question, les données lues relèvent naturellement du TBF auquel ce PDTCH a été attribué. S'il y a plusieurs PDTCH, le contrôleur d'émission 53 doit sélectionner le TBF dont les données sont à lire.

Cette sélection peut être opérée à l'aide de variables F$_{k,j}$ tenues à jour pour chaque TBF actif (comme précédemment, l'index k représente la classe d'abonnement et l'index j le rang du TBF dans la classe). La variable F$_{k,j}$ est initialisée à zéro à la création du TBF. Chaque fois que le TBF (k, j) est sélectionné pour l'émission d'un bloc RLC/MAC (sur un PDCH quelconque), la variable F$_{k,j}$ est augmentée de la quantité 1/Da$_{k,j}$. Pour un PDCH d'index (f, t), la sélection consiste à prendre le TBF (k, j) pour lequel la variable F$_{k,j}$ est la plus petite sur l'ensemble T(f,t) au début de la période d'émission considérée.

Lorsque le débit total alloué DTA n'excède pas la capacité DMAX, ce mécanisme de sélection de flux assure que les débits alloués Da$_{k,j}$ seront en moyenne obtenus.

**Revendications**

1. Procédé de contrôle d'émission de blocs de données appartenant à plusieurs flux temporaires de blocs vers des terminaux sur un nombre L de canaux physiques dédiés à la transmission de données en mode paquets, L étant un nombre au moins égal à 1, chaque canal physique ayant des périodes successives destinées chacune à l'émission d'un bloc, le procédé comprenant les étapes suivantes :

   - déterminer des débits de transmission (Da$_{k,j}$) respectivement alloués aux flux de blocs en fonction de débits de transmission respectivement demandés lors de la création des flux ;
   - attribuer à chaque nouveau flux créé au moins un canal logique de trafic supporté par l'un des L canaux physiques ; et
   - sélectionner, pour chaque période d'émission sur un canal physique, un flux de blocs auquel est attribué un canal logique de trafic supporté par ledit canal physique afin de commander l'émission d'un bloc du flux sélectionné au cours de ladite période d'émission, la sélection de flux étant gouvernée par les valeurs des débits de transmission alloués aux flux auxquels sont attribués des canaux logiques de trafic supportés par ledit canal physique,

dans lequel les terminaux sont répartis en plusieurs classes d'abonnement correspondant à différents niveaux de priorité, dans lequel on associe à chaque classe d'abonnement un paramètre de restriction de débit ($M_k$) représentant une proportion du débit global demandé pour les flux de blocs vers des terminaux de ladite classe, et dans lequel les débits de transmission alloués aux flux sont déterminés de façon à tenir compte des proportions représentées par les paramètres de restriction en cas d'insuffisance des canaux physiques dédiés au mode paquets par rapport au total du débit demandé pour les flux de blocs.

2. Procédé selon la revendication 1, dans lequel le paramètre de restriction de débit ($M_k$) associé à une classe d'abonnement représente une proportion du débit global demandé pour l'ensemble des flux de blocs vers des terminaux de ladite classe qui peut ne pas être allouée audit ensemble de flux dans certains au moins des cas d'insuffisance des canaux physiques dédiés au mode paquets.

3. Procédé selon la revendication 2, comprenant l'étape suivante en réponse à la création d'un flux de blocs pour lequel est demandé un débit tel que les canaux physiques dédiés au mode paquets deviennent insuffisants par rapport au total du débit demandé :

- allouer aux flux de blocs vers les terminaux de la classe d'abonnement correspondant au niveau de priorité le plus faible des débits de transmission inférieurs aux débits respectivement demandés pour lesdits flux, le rapport entre le débit global alloué auxdits flux et le débit global demandé pour lesdits flux étant au plus égal à 1 moins la proportion de débit représentée par le paramètre de restriction associé à ladite classe.

4. Procédé selon la revendication 3, comprenant les étapes suivantes en réponse à la création d'un flux de blocs pour lequel est demandé un débit tel que la différence entre le total du débit demandé et la capacité en débit des canaux physiques dédiés au mode paquets devient supérieure à

$$\sum_{k=1}^{n} M_k.Dt_k \, ,$$

où les classes d'abonnement sont indexées par un entier k allant de 1 pour la classe la moins prioritaire à N pour la classe la plus prioritaire, n est un entier tel que $1 \le n < N$, $M_k$ désigne la proportion de débit représentée par le paramètre de restriction de débit associé à la classe k et $Dt_k$ désigne le débit global demandé pour les flux vers les terminaux de la classe k :

- allouer aux flux de blocs vers les terminaux de chaque classe k, avec $1 \le k \le n$, des débits de transmission sensiblement égaux à $1 - M_k$ fois les débits respectivement demandés pour lesdits flux ; et
- allouer aux flux de blocs vers les terminaux de la classe n+1 des débits de transmission inférieurs aux débits respectivement demandés pour lesdits flux, le rapport entre le débit global alloué auxdits flux et le débit global demandé pour lesdits flux étant au plus égal à $1 - M_{n+1}$.

5. Procédé selon la revendication 4, comprenant l'étape suivante en réponse à la création d'un flux de blocs pour lequel est demandé un débit tel que la différence entre le total du débit demandé et la capacité en débit des canaux physiques dédiés au mode paquets devient égale à

$$\alpha \times \sum_{k=1}^{N} M_k.Dt_k$$

avec $\alpha > 1$ :

- allouer aux flux de blocs vers les terminaux de chaque classe k, avec $1 \le k \le N$, des débits de transmission sensiblement égaux à $(1 - M_k)/\alpha$ fois les débits respectivement demandés pour lesdits flux.

6. Procédé selon la revendication 4 ou 5, comprenant l'étape suivante en réponse à la suppression d'un flux temporaire de blocs lorsque les canaux physiques dédiés au mode paquets sont insuffisants par rapport au total du débit demandé pour les flux de blocs :

- augmenter les débits alloués aux flux de blocs vers les terminaux de la classe d'abonnement correspondant au niveau de priorité le plus élevé auxquels étaient précédemment alloués des débits inférieurs aux débits demandés.

7. Procédé selon l'une quelconque des revendications précédentes, dans lequel l'attribution d'un canal logique de trafic à un nouveau flux créé comporte la minimisation d'une fonction coût dépendant des débits de transmission alloués aux flux de blocs et de capacités de réception respectives des terminaux destinataires desdits flux, la capacité de réception d'un terminal représentant sa capacité à recevoir simultanément des blocs sur plusieurs canaux physiques.

8. Procédé selon l'une quelconque des revendications précédentes, dans lequel on tient à jour une grandeur de sélection pour chaque flux de blocs en lui ajoutant une quantité inversement proportionnelle au débit alloué audit flux chaque fois que ledit flux est sélectionné pour l'émission d'un bloc, t dans lequel la sélection d'un flux de blocs pour chaque période d'émission sur un canal physique consiste à sélectionner le flux, auquel est attribué un canal logique de trafic supporté par ledit canal physique, pour lequel ladite grandeur de sélection est minimale.

9. Dispositif de contrôle d'émission de blocs de données appartenant à plusieurs flux temporaires de blocs vers des terminaux, comprenant des moyens de traitement (51-53) agencés pour mettre en oeuvre toutes les étapes d'un procédé selon l'une quelconque des revendications précédentes.

**Patentansprüche**

1. Verfahren zum Steuern des Sendens von Datenblöcken, die zu mehreren temporären Flüssen von Blöcken zu Terminals auf einer Anzahl von L physischen Kanälen gehören, welche dem Übertragen von Daten im Paket-Modus gewidmet sind, wobei L eine Anzahl von mindestens gleich 1 ist und jeder physische Kanal aufeinanderfolgende Perioden hat, die jeweils zum Senden eines Blocks bestimmt sind, und wobei das Verfahren folgende Schritte umfasst:

- Übertragungs-Durchsätze ($Da_{k,j}$) zu bestimmen, die jeweils den Blockflüssen abhängig von den Übertragungs-Durchsätzen zugeteilt sind, die bei der Schaffung der Flüsse nachgefragt werden;
- jedem neu geschaffenen Fluss mindestens einen logischen Verkehrskanal zuzuordnen, der von einem der L physischen Kanäle gestützt ist; und
- für jede Sendeperiode auf einem logischen Kanal einen Fluss von Blöcken auszuwählen, dem ein logischer, von dem besagten physischen Kanal unterstützter Verkehrskanal zugeordnet ist, um die Sendung eines Blocks des ausgewählten Flusses im Verlauf der besagten Sendeperiode zu steuern, wobei die Auswahl des Flusses durch die Werte der den Flüssen zugeteilten Übertragungs-Durchsätze bestimmt wird, denen logische, durch besagten physischen Kanal unterstützte Verkehrskanäle zugeordnet sind,

bei dem die Terminals auf mehrere Abonnements-Klassen aufgeteilt sind, welche unterschiedlichen Prioritäts-Niveaus entsprechen, bei dem man jeder Abonnements-Klasse einen Parameter der Restriktion des Durchsatzes ($M_k$) zuordnet, der ein Maß des global für die Flüsse von Blöcken zu den Terminals besagter Klasse benötigten Durchsatzes darstellt, und bei dem die den Flüssen zugeteilten Übertragungs-Durchsätze so bestimmt sind, dass sie die durch die Parameter der Restriktion dargestellten Proportionen im Falle des Nicht-Genügens der dem Paketmodus zugeordneten physischen Kanäle im Verhältnis zur Gesamtheit des für die Flüsse der Blöcke benötigten Durchsatzes berücksichtigen.

2. Verfahren nach Anspruch 1, in dem der einer Abonnements-Klasse zugeordnete Parameter der Restriktion ($M_k$) des Durchsatzes ein Maß des für die Gesamtheit der Blockflüsse zu den Terminals der besagten Klasse nachgefragten globalen Durchsatzes darstellt, der besagter Gesamtheit der Flüsse zumindest in bestimmten Fällen der Überlastung der dem Paketmodus gewidmeten physischen Kanäle nicht zugeteilt werden kann.

3. Verfahren nach Anspruch 2, das in Antwort auf die Erstellung eines Flusses von Blöcken, für welchen ein derartiger Durchsatz nachgefragt wird, dass die dem Paketmodus gewidmeten physischen Kanäle im Hinblick auf die Gesamtheit des nachgefragten Durchsatzes unzureichend werden, den folgenden Schritt umfasst:

- den Flüssen von Blöcken zu den Terminals der Abonnements-Klasse, welche dem geringsten Prioritätsniveau entspricht, Übertragungs-Durchsätze zuzuteilen, die geringer als die für die jeweils für besagte Flüsse nachgefragten Durchsätze sind, wobei das Verhältnis zwischen dem den besagten Flüssen zugeteilten globalen Durchsatz und dem für die besagten Flüsse nachgefragten globalen Durchsatz höchstens gleich 1 minus demjenigen Maß des Durchsatzes ist, das durch den der besagten Klasse zugeordneten Parameter der Restriktion repräsentiert wird.

**4.** Verfahren nach Anspruch 3, das in Antwort auf die Erstellung eines Flusses von Blöcken, für den ein derartiger Durchsatz nachgefragt wird, dass die Differenz zwischen der Gesamtheit des nachgefragten Durchsatzes und der Durchsatz-Kapazität der dem Paket-Modus gewidmeten physischen Kanäle höher als

$$\sum_{k=1}^{n} M_k \cdot Dt_k$$

wird, wobei die Abonnements-Klassen durch eine Ganzzahl k indiziert sind, die von 1 für die Klasse niedrigster Priorität bis N für die Klasse höchster Priorität läuft, und n eine Ganzzahl mit $1 \leq n < N$ ist, $M_k$ das durch den der Klasse k zugeordneten Parameter der Durchsatz-Restriktion repräsentierte Maß des Durchsatzes bezeichnet und $Dt_k$ den für die Flüsse zu den Terminals der Klasse k nachgefragten Fluss bezeichnet, die folgenden Schritte umfasst:

- den Flüssen von Blöcken zu den Terminals jeder Klasse k, mit $1 \leq k \leq n$, Übertragungs-Durchsätze zuzuteilen, die im Wesentlichen gleich 1 - $M_k$ mal den jeweils für die besagten Flüsse nachgefragten Durchsätze sind; und
- den Flüssen von Blöcken zu den Terminals der Klasse n+1 Übertragungs-Durchsätze zuzuteilen, die geringer als die jeweils für die besagten Flüsse nachgefragten Durchsätze sind, wobei das Verhältnis zwischen dem globalen, den besagten Flüssen zugeteilten Durchsatz und dem globalen, für die besagten Flüsse nachgefragten Durchsatz höchstens gleich 1 - $M_{n+1}$ ist.

**5.** Verfahren nach Anspruch 4, umfassend den folgenden Schritt in Antwort auf die Erstellung eines Flusses von Blöcken, für welchen ein derartiger Durchsatz nachgefragt wird, dass die Differenz zwischen der Gesamtheit des nachgefragten Durchsatzes und der Durchsatz-Kapazität der dem Paketmodus gewidmeten physischen Kanäle gleich

$$\alpha \times \sum_{k=1}^{N} M_k \cdot Dt_k$$

wird, mit $\alpha > 1$:

- den Flüssen von Blöcken zu den Terminals jeder Klasse k, mit $1 \leq k \leq N$, Übertragungs-Durchsätze zuzuteilen, die im Wesentlichen gleich $(1 - M_k)/\alpha$ mal die jeweils für die besagten Flüsse nachgefragten Durchsätze sind.

**6.** Verfahren nach Anspruch 4 oder 5, das in Antwort auf die Löschung eines temporären Flusses von Blöcken, wenn die dem Paketmodus gewidmeten physischen Kanäle im Verhältnis zur Gesamtheit des für die Flüsse von Blöcken nachgefragten Durchsatzes unzureichend sind, den folgenden Schritt umfasst:

- die Durchsätze zu erhöhen, welche den Flüssen von Blöcken zu den Terminals der Abonnements-Klasse zugeteilt sind, die dem höchsten Prioritätsniveau entspricht, dem zuvor geringere als die nachgefragten Durchsätze zugeteilt waren.

**7.** Verfahren nach einem der vorstehenden Ansprüche, bei dem die Zuordnung eines logischen Verkehrs-Kanals zu einem neu erstellten Fluss die Minimierung einer Kostenfunktion umfasst, abhängig von den Übertragungs-Durchsätzen, die den Flüssen von Blöcken zuteilt sind und den jeweiligen Empfangskapazitäten der Bestimmungs-Terminals der besagten Flüsse, wobei die Empfangskapazität eines Terminals dessen Kapazität bezeichnet, gleichzeitig Blöcke über mehrere physische Kanäle zu empfangen.

**8.** Verfahren nach einem der vorstehenden Ansprüche, bei dem man für jeden Fluss von Blöcken eine Auswahlgröße aktualisiert, indem man ihm, jedes Mal wenn dieser Fluss zum Senden eines Blocks ausgewählt wird, eine Größe zuordnet, die umgekehrt proportional zu dem dem besagten Fluss zugeteilten Durchsatz ist, wobei die Auswahl eines Flusses von Blöcken für jede Sendeperiode auf einem physischen Kanal darin besteht, den Fluss auszuwählen, dem ein von besagtem physischen Kanal unterstützter logischer Verkehrskanal zugeordnet ist, für welchen besagte Auswahlgröße minimal ist.

**9.** Vorrichtung zum Steuern des Aussendens von Blöcken von Daten, die zu mehreren temporären Flüssen von Blöcken zu Terminals gehören, umfassend Behandlungs-Mittel (51 - 53) in einer Ausstattung zum Durchführen aller Schritte eines Verfahrens nach einem der vorstehenden Ansprüche.

**Claims**

**1.** A method of controlling the sending of data blocks pertaining to a plurality of temporary block flows to terminals on a number L of physical channels dedicated to packet mode transmission of data, L being a number at least equal to 1, wherein each physical channel has successive periods each intended for sending one block, the method comprising the steps of:

- determining transmission throughputs ($Da_{k,j}$) respectively allocated to the block flows as a function of transmission throughputs respectively requested when creating the flows;
- allotting to each new flow created at least one logical traffic channel supported by one of the L physical channels; and
- selecting, for each send period on a physical channel, a block flow to which a logical traffic channel supported by said physical channel is allotted so as to control sending of a block of the selected flow in said send period, the flow selection being governed by the values of the transmission throughputs allocated to the flows to which logical traffic channels supported by said physical channel are allotted,

wherein the terminals are distributed into a plurality of subscription classes corresponding to different priority levels, wherein with each subscription class is associated a throughput restriction parameter ($M_k$) representing a proportion of the overall throughput requested for the block flows to terminals of said class, and wherein the transmission throughputs allocated to the flows are so determined as to take account of the proportions represented by the restriction parameters in case of insufficiency of the physical channels dedicated to the packet mode relative to the total throughput requested for the block flows.

2. A method according to Claim 1, wherein the throughput restriction parameter ($M_k$) associated with a subscription class represents a proportion of the overall throughput requested for the set of block flows to terminals of said class which may not be allocated to said set of flows in at least some of the cases of insufficiency of the physical channels dedicated to the packet mode.

3. A method according to Claim 2, comprising the following step in response to the creation of a block flow for which a throughput is requested such that the physical channels dedicated to the packet mode become insufficient relative to the total throughput requested:

- allocating to the block flows to the terminals of the subscription class corresponding to the lowest priority level transmission throughputs smaller than the throughputs respectively requested for said flows, whereby the ratio of the overall throughput allocated to said flows to the overall throughput requested for said flows is at most equal to 1 minus the throughput proportion represented by the restriction parameter associated with said class.

4. A method according to Claim 3, comprising the following steps in response to the creation of a block flow for which a throughput is requested such that the difference between the total throughput requested and the throughput capacity of the physical channels dedicated to the packet mode becomes greater than

$$\sum_{k=1}^{n} M_k . Dt_k \, ,$$

where the subscription classes are indexed by an integer k ranging from 1 for the class of lowest priority to N for the class of highest priority, n is an integer such that $1 \leq n < N$, $M_k$ designates the throughput proportion represented by the throughput restriction parameter associated with class k and $Dt_k$ designates the overall throughput requested for the flows to the terminals of class k:

- allocating to the block flows to the terminals of each class k, with $1 \leq k \leq n$, transmission throughputs substantially equal to $1 - M_k$ times the throughputs respectively requested for said flows; and
- allocating to the block flows to the terminals of class n+1, transmission throughputs which are less than the throughputs respectively requested for said flows, the ratio of the overall throughput allocated to said flows to the overall throughput requested for said flows being at most equal to $1 - M_{n+1}$.

5. A method according to Claim 4, comprising the following step in response to the creation of a block flow for which a throughput is requested such that the difference between the total throughput requested and the throughput capacity of the physical channels dedicated to the packet mode becomes equal to

$$\alpha \times \sum_{k=1}^{N} M_k . Dt_k$$

with $\alpha > 1$:

- allocating to the block flows to the terminals of each class k, with $1 \leq k \leq N$, transmission throughputs substantially equal to $(1 - M_k)/\alpha$ times the throughputs respectively requested for said flows.

6.  A method according to Claim 4 or 5, comprising the following step in response to the deletion of a temporary block flow when the physical channels dedicated to the packet mode are insufficient relative to the total throughput requested for the block flows:

    - increasing the throughputs allocated to the block flows to the terminals of the subscription class corresponding to the highest priority level which were previously allocated throughputs smaller than the throughputs requested.

7.  A method according to any one of the preceding claims, wherein the allotting of a logical traffic channel to a new flow created comprises minimizing a cost function dependent on the transmission throughputs allocated to the block flows and respective reception capacities of the terminals for which said flows are intended, the reception capacity of a terminal representing its capacity to simultaneously receive blocks on a plurality of physical channels.

8.  A method according to any one of the preceding claims, wherein a selection quantity is kept up-to-date for each block flow by adding thereto a quantity inversely proportional to the throughput allocated to said flow whenever said flow is selected for the sending of a block, and wherein the selecting of a block flow for each send period on a physical channel consists in selecting the flow, to which is allotted a logical traffic channel supported by said physical channel, for which said selection quantity is minimal.

9.  An apparatus for controlling the sending of data blocks pertaining to a plurality of temporary block flows to terminals, comprising processing means (51-53) arranged for implementing all the steps of a method according to any one of the preceding claims.

## FIG. 1

SGSN 5 — Gb — PCU 22 — Agprs — BSC 21 — Abis — BTS 20 — Um — MS 10

NSS | BSS

## FIG. 2

CONTRÔLEUR INTERFACE Gb 40

Gb

TAMPON 41

RLC/MAC 46

TRAMES TRAU 44

INTERFACE SYNCHRONE 45

Agprs

42

22

CRÉATION / SUPPRESSION TBF — 50

GESTION DÉBITS — 51

TFI

ATTRIBUTION PDTCH — 52

$\{Da_{k,j}\}$

CONTRÔLE D'ÉMISSION — 53

41 — TAMPON

*FIG. 3*

77

$$r \leftarrow \frac{DTA - DMAX}{DTA}$$

*FIG. 4b*

78 — $DTA \leftarrow DMAX$

79 — $k \leftarrow k - 1$

80 — $Dta_k \leftarrow (1 - r) Dta_k$
$j \leftarrow 1$

81 — $Da_{k,j} \leftarrow (1 - r) Da_{k,j}$

Oui — $j = P(k)$ ? — Non — 82

83 — $j \leftarrow j + 1$

84 — Oui — $k = 1$ ? — Non

$P(K) \leftarrow P(K) + 1$ ——— 60

$D_{K,P(K)} \leftarrow D$
$Dt_K \leftarrow Dt_K + D$ ——— 61
$DT \leftarrow DT + D$

$Da_{K,P(K)} \leftarrow D$
$Dta_K \leftarrow Dta_K + D$ ——— 62
$DTA \leftarrow DTA + D$

$k \leftarrow 1$ ——— 63

75
$k \leftarrow k + 1$

Oui — $DTA \leq DMAX$ ? — Non
64
fin

$k \leftarrow k + 1$

Oui — $k > N$ ? — Non
65
fig. 4b

$Dta_k > (1-M_k)Dt_k$ ? — Non
Oui                                              66
67

$r \leftarrow \min\left(M_k , \dfrac{DTA - DMAX}{Dta_k}\right)$ ——— 68

$DTA \leftarrow DTA - r \cdot Dta_k$ ——— 69

$Dta_k \leftarrow (1 - r) \cdot Dta_k$
$j \leftarrow 1$ ——— 70

71 — $Da_{k,j} \leftarrow (1 - r) \cdot Da_{k,j}$

73

Oui — $j = P(k)$ ? — Non — $j \leftarrow j + 1$
72

*FIG. 4a*

15

$$Dt_K \leftarrow Dt_K - D_{K,J}$$
$$Dta_K \leftarrow Dta_K - Da_{K,J}$$
$$DTA \leftarrow DTA - Da_{K,J}$$
$$P(K) \leftarrow P(K) - 1$$
$$j \leftarrow J$$

90

93

$$j \leftarrow j + 1$$

Oui — $j \leq P(K)$ ? — Non

91

92

$$D_{K,j} \leftarrow D_{K,j+1}$$
$$Da_{K,j} \leftarrow Da_{K,j+1}$$

95

Oui — $DT > DMAX$ ? — Non

$$k \leftarrow N$$

97

_FIG. 5_

Oui — $Dta_k < Dt_k$ ? — Non

98

101

$$r \leftarrow \frac{DMAX - DTA}{Dta_k}$$
$$j \leftarrow 1$$

102 — $\Delta \leftarrow \min(D_{k,j} - Da_{k,j},\, r \cdot Da_{k,j})$

103

$$Da_{k,j} \leftarrow Da_{k,j} + \Delta$$
$$Dta_k \leftarrow Dta_k + \Delta$$
$$DTA \leftarrow DTA + \Delta$$

105

Oui — $j = P(k)$ ? — Non — $j \leftarrow j + 1$

104

99

Oui — $k = 1$ ? — Non — 100 — $k \leftarrow k - 1$

$$DT \leftarrow \sum_{k=1}^{N} Dt_k$$

96